# EUROPÄISCHE PATENTSCHRIFT

(11) **EP 0 958 691 B1**
(45) Veröffentlichungstag und Bekanntmachung des Hinweises auf die Patenterteilung: **20.08.2003**
(21) Anmeldenummer: 98907853.0
(22) Anmeldetag: 22.01.1998
(51) Int. Cl.: H04M 3/42

(54) **VERFAHREN ZUM ANZEIGEN VON LEISTUNGSMERKMAL-BEZEICHNUNGEN AN EINEM KOMMUNIKATIONSENDGERÄT**
HOW TO DISPLAY ON A TERMINAL EQUIPMENT THE NAMES OF THE OPTIONS OFFERED TO THE USER
COMMENT AFFICHER SUR UN EQUIPEMENT TERMINAL DE COMMUNICATION LES NOMS DESIGNANT LES POSSIBILITES OFFERTES A L'USAGER

(30) Priorität: 05.02.1997 DE 19704344
(43) Veröffentlichungstag der Anmeldung: 24.11.1999
(73) Patentinhaber: SIEMENS AKTIENGESELLSCHAFT, 80333 München (DE)
(72) Erfinder: HECKER, Hans-Dieter, D-81475 München (DE); WAGNER, Gisela, D-82216 Maisach (DE)
(86) Internationale Anmeldenummer: DE9800196
(87) Internationale Veröffentlichungsnummer: WO98035488

(56) Entgegenhaltungen:
- EP-A- 0 419 948
- EP-A- 0 701 381
- DE-A- 19 523 537
- US-A- 5 369 696

## Beschreibung

Die Erfindung betrifft ein Verfahren zum Anzeigen von Leistungsmerkmal-Bezeichnungen gemäß dem Oberbegriff des Patentanspruchs 1.

Eine Vielzahl von bekannten Fernsprechendgeräten, insbesondere zum Anschluß an private Kommunikationssysteme, weisen einen Funktionsumfang auf, der weit über die Grundfunktionen eines einfachen Telefons hinausreicht. Mit diesem Funktionsumfang und unterstützt durch spezielle Anzeige- und Bedienelemente, z. B. einem LC-Display sowie Funktions- und Steuertasten insbesondere zur schnellen Aktivierung von Leistungsmerkmalen, soll einem Benutzer des Endgerätes ein hoher Bedienkomfort vermittelt werden.

Als eine den Bedienkomfort wesentlich erhöhende Endgerätefunktion ist auch eine sogenannte Menüsteuerung anzusehen, mit der auf dem Display des Endgerätes u.a. ein Angebot der dem Bediener zur Verfügung stehenden Funktionen, die auf dem Gebiet der Kommunikationstechnik als Leistungsmerkmale bezeichnet werden, unterbreitet werden kann. Die angebotenen Leistungsmerkmale werden dem Benutzer damit gleichzeitig zur Selektierung oder Aktivierung angeboten.

In diesem Zusammenhang ist bereits ein Endgerät mit einer Menü-Tastensteuerung bekannt, mit deren Hilfe auf dem Display des Endgerätes ein Vor- und Zurückblättern von Menüpunkten, die in Form von einzelnen Leistungsmerkmal-Bezeichnungen angegeben sind, durchgeführt werden kann und die eine Bestätigung im Sinne einer Selektierung bzw. Aktivierung des momentan angezeigten bzw. ausgewählten Menüpunktes erlaubt.

Eine vorgenommene Bestätigung bewirkt im Fernsprechendgerät, daß eine das selektierte Leistungsmerkmal identifizierende und eine Aktivierung desselben beantragende Meldung an das mit dem Fernsprechendgerät verbundene Kommunikationssystem übermittelt wird. In dem Kommunikationssystem wird dann das betreffende Leistungsmerkmal, bezogen auf den die Meldung übermittelnden Teilnehmeranschluß ausgeführt bzw. eingerichtet.

Als Resultat einer im Kommunikationssystem vorgenommenen Berechtigungsprüfung, bei der überprüft wird, ob das selektierte Leistungsmerkmal für die betreffende Teilnehmerstelle entsprechend eines für die Teilnehmerstelle definierten Berechtigungsumfangs verfügbar ist, wird im Negativfall die Aktivierung des Leistungsmerkmals abgewiesen und an das Fernsprechendgerät ein Hinweis ausgegeben, daß das gewünschte Leistungsmerkmal nicht aktivierbar sei.

Aufgabe der vorliegenden Erfindung ist es, bei Kommunikationsendgeräten mit einer Anzeige von Leistungsmerkmal-Bezeichnungen im Sinne einer Selektierung oder Aktivierung derselben, Maßnahmen vorzusehen, mit denen derartige Negativmeldungen vermieden werden.

Gelöst wird diese Aufgabe ausgehend von den Merkmalen des Oberbegriffes des Patentanspruchs 1 durch dessen kennzeichnenden Merkmale.

Als wesentlicher Vorteil des erfindungsgemäßen Verfahrens ist anzusehen, daß es auch in einer bereits bestehenden Kommunikationsanlage nachträglich ohne großen Aufwand implementiert werden kann. Mit der Kopplung an die zentrale Datenbasis der Kommunikationsanlage wird eine doppelte Datenhaltung vermieden und ein schnelles Zugreifen auf die jeweils aktuellen Daten sichergestellt.

Vorteilhafte Weiterbildungen der Erfindung sind in den Unteransprüchen angegeben.

Als Vorteil bei der Aktivierung von Leistungsmerkmalen ist anzusehen, daß die Aktivierung von Leistungsmerkmalen mittels Leistungsmerkmal-Kennzahlen in einem bestehenden Kommunikationssystem erhalten bleiben kann. Da vom Endgerät keine Leistungsmerkmal-Kennzahlen an das Kommunikationssystem übermittelt werden, wird die Eingabe dieser Kennzahlen, wie für eine Aktivierung eines Leistungsmerkmals bei einem herkömmlichen Endgerät durch den Benutzer erforderlich, von einem Benutzerinterface-Modul im Kommunikationssystem simuliert.

Ein Ausführungsbeispiel der Erfindung wird im folgenden anhand der Zeichnung näher erläutert.

Dabei zeigen
- FIG 1: ein schematisches Blockbild mit den für eine Einbindung der Erfindung in ein Kommunikationssystem wesentlichen Elementen
- FIG 2: ein Ablaufdiagramm mit den wesentlichen Verfahrensschritten basierend auf dem erfindungsgemäßen Verfahren

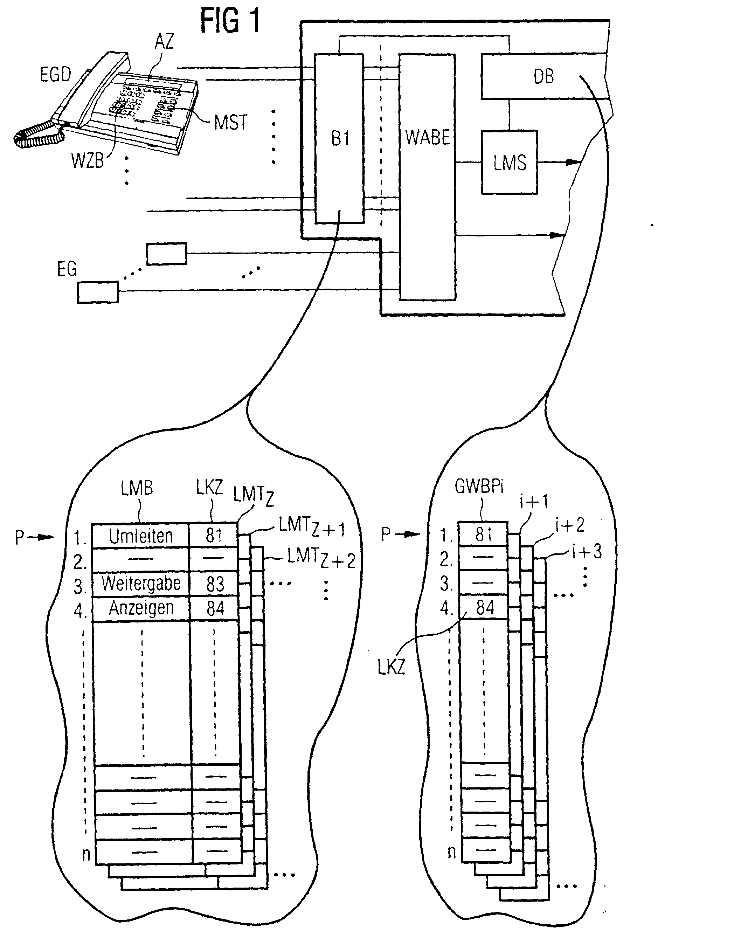

In FIG 1 sind die für ein Verständnis der Erfindung wesentlichen Elemente, insbesondere Module und Tabellen schematisch dargestellt. An ein Kommunikationssystem KS sind Endgeräte EGD und herkömmliche Endgeräte EG angeschlossen. Die Endgeräte EGD sind Endgeräte mit einer Anzeigeeinrichtung, z. B. einem LC-Display und Menüsteuertasten MST zum schrittweisen Vor- und Zurückpositionieren von angezeigten Menüpunkten - in der Form von Leistungsmerkmal-Bezeichnungen - sowie zur Auswahl bzw. Bestätigung der Auswahl eines positionierten Menüpunktes. Zudem weisen die Endgeräte EGD einen herkömmlichen Wahlziffernblock WZB auf. Die herkömmlichen Endgeräte EG sind dagegen ohne eine Anzeigeeinrichtung AZ zur Menüdarstellung und ohne Menüsteuertasten MST ausgerüstet.

Im Kommunikationssystem KS sind eine Wahlbewertungseinrichtung WABE eine Datenbasis DB und eine Leitungsmerkmalssteuerung MLS an einer Aktivierung von Leistungsmerkmalen über herkömmliche Endgeräte EG beteiligt. Zur Korrespondenz mit den Endgeräten EGD ist der Wahlbewertungseinrichtung WABE ein Benutzerinterface-Modul BI vorgeschaltet. Das Benutzerinterface-Modul BI bedient nur die Endgeräte EGD und simuliert gegenüber der Wahlbewertungseinrichtung WABE den Anschluß von herkömmlichen Endgeräten EG. Das Benutzerinterface-Modul BI hat auch Zugriff auf die Datenbasis DB.

Die innerhalb des Kommunikationssystem KS angesprochenen Module bzw. Einrichtungen verstehen sich als programmtechnisch realisierte Funktionseinheiten, die miteinander kommunizieren.

In der Datenbasis DB sind eine Vielzahl von Berechtigungstabellen eingerichtet, die im weiteren als Wahlbewertungsgruppentabellen GWBPi, i+1,.. bezeichnet werden und die jeweils ein definiertes Berechtigungsprofil repräsentieren. Die Benutzer des Kommunikationssystem sind nämlich hinsichtlich ihrer Berechtigung zur Aktivierung von Leistungsmerkmalen zu unterscheiden. So ist jeder Benutzer, also dessen Teilnehmeranschluß einer sogenannten Wahlbewertungsgruppe zugeordnet, in der eine Aktivierung nur von bestimmten, in der zugehörigen Wahlbewertungsgruppentabelle GWBPi identifizierten Leistungsmerkmalen, erlaubt ist.

Jeder Wahlbewertungsgruppe ist deshalb eine individuelle Wahlbewertungsgruppentabelle GWBPi zugeordnet. In diesen sind jeweils Tabellenpositionen p von 1 bis n entsprechend der Anzahl von im Kommunikationssystem KS maximal zur Verfügung stehenden Leistungsmerkmalen eingerichtet. Die Reihenfolge der Leistungsmerkmale, d. h. die Zuordnung der Tabellenpositionen p zu den einzelnen Leistungsmerkmalen ist definiert und bleibt unverändert; z. B. ist die Tabellenposition p=1 für das Leistungsmerkmal "Gespräch umleiten", die Tabellenposition p=2 für das Leistungsmerkmal "Rufnummernanzeige unterdrücken" usw. reserviert. Ein Leistungsmerkmal kann von einem Benutzer nur dann aktiviert werden, wenn in der zugehörigen Wahlbewertungsgruppentabelle GWBPi an der für das betreffende Leistungsmerkmal reservierten Tabellenposition p die Leistungsmerkmal-Kennziffer LKZ des Leistungsmerkmals eingetragen ist. Fehlt eine Eintragung an der betreffenden Tabellenposition p oder ist der eingetragene Wert ungültig, so ist der Benutzer nicht zur Aktivierung des Leistungsmerkmals berechtigt.

Hinsichtlich der Art und Weise einer Aktivierung von Leistungsmerkmalen im Kommunikationssystem sei an dieser Stelle erwähnt, daß an einem herkömmlichen Endgerät für eine Aktivierung eines Leistungsmerkmals eine das Leistungsmerkmal identifizierende Leistungsmerkmal-Kennzahl LKZ eingegeben werden muß. Diese wird dann von der Wahlbewertungseinrichtung WABE als solche erkannt und der Leistungsmerkmal-Steuerung LMS übermittelt. Von dieser wird die betreffende Wahlbewertungsgruppentabelle GWBPi in der Datenbasis DB überprüft und im Falle einer vorliegenden Berechtigung für das Leistungsmerkmal - die betreffende Leistungsmerkmal-Kennzahl LKZ wurde also in der Wahlbewertungsgruppentabelle GWBPi gefunden - wird das Leistungsmerkmal von der Leistungsmerkmalsteuerung LMS aktiviert. Für den Fall, daß in der Wahlbewertungsgruppentabelle GWBPi die Leistungsmerkmal-Kennzahl LKZ nicht gefunden wurde, wird die eingegebene Leistungsmerkmal-Kennzahl LKZ als ungültig verworfen.

In dem Benutzerinterface-Modul BI, das für eine Implementierung des erfindungsgemäßen Verfahrens in das Kommunikationssystem KS eingebracht ist, sind eine Mehrzahl von Leistungsmerkmal-Tabellen LMTz, z+1,.. eingerichtet, die jeweils auch Tabellenpositionen p von 1 bis n für die im Kommunikationssystem KS maximal vorhandenen Leistungsmerkmale aufweisen. Die Zuordnung von Tabellenposition p und Leistungsmerkmalen ist dabei die gleiche wie bei den Wahlbewertungsgruppentabellen GWBPi, i+1,...

Die Leistungsmerkmal-Tabellen LMTz, z+1,.. sind jeweils einem Endgerätezustand zugeordnet. Das heißt es gibt verschiedene Zustände des Endgerätes, die z. B. vom Bediener herbeigeführt werden und in denen manche Leistungsmerkmale systembedingt nicht aktiviert werden können oder dürfen. Jedem möglichen Endgerätezustand z ist eine entsprechende Leistungsmerkmal-Tabelle LMTz, z+1,... zugeordnet, in der jeweils nur die Leistungsmerkmale in Form einer Leistungsmerkmal-Bezeichnung LMB und einer Leistungsmerkmal-Kennzahl LKZ an der betreffenden Tabellenposition P identifiziert sind, die in dem betreffenden Zustand des Endgerätes systembedingt aktivierbar sind.

Die Leistungsmerkmal-Bezeichnungen LMB sind jeweils in Form eines Textes in der Leistungsmerkmal-Tabelle LMT hinterlegt und die Leistungsmerkmal-Kennzahlen LKZ sind mit den zur Aktivierung von Leistungsmerkmalen an herkömmlichen Endgeräten EG einzugebenden Leistungsmerkmal-Kennzahlen LKZ identisch.

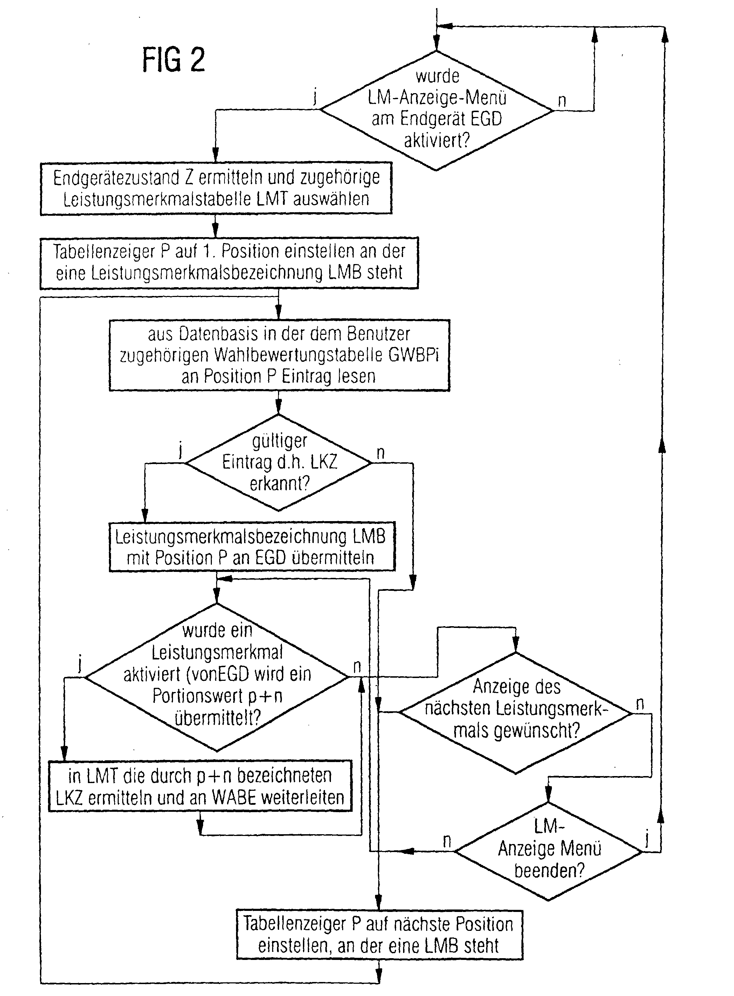

In FIG 2 ist ein Ablaufdiagramm mit im Rahmen einer Durchführung des erfindungsgemäßen Verfahrens auftretenden Verfahrensschritten dargestellt. Sobald am Endgerät EGD, veranlaßt durch Betätigung entsprechender Tasten, die Absicht des Benutzers zur Aktivierung eines - noch nicht identifizierten - Leistungsmerkmals erkannt wurde und daraufhin eine Anzeigemeldung an das Kommunikationssystem KS übermittelt wird, wird in dem Benutzerinterface-Modul BI der Endgerätezustand z des betreffenden Endgerätes EGD ermittelt und die zugehörige Leistungsmerkmal-Tabelle LNTz ausgewählt.

Ein Tabellenzeiger wird auf die niedrigste Tabellenposition p eingestellt, an der eine Leistungsmerkmal-Bezeichnung LMB vermerkt ist. Die bezeichnete Tabellenposition p wird daraufhin an die Datenbasis DB übermittelt, in der aus der dem Benutzer zugehörigen Wahlbewertungsgruppentabelle GWBPi die an der übermittelten Tabellenposition p befindliche Eintrag ausgelesen und an das Benutzerinferface-Modul BI zurückübermittelt wird.

Wurde eine gültige Leistungsmerkmal-Kennzahl LKZ zurückübermittelt - der Benutzer ist also zur Aktivierung des Leistungsmerkmals berechtigt - wird die in der Leistungsmerkmal-Tabelle LMT durch den Tabellenzeiger bezeichnete Leistungsmerkmal-Bezeichnung LMB an das Endgerät EGD zur Anzeige übermittelt. Zusätzlich wird auch die zugehörige Tabellenposition p an das Endgerät EGD übermittelt.

Für den Fall, daß am Endgerät EGD durch Betätigen der Menüsteuertasten eine Selektierung bzw. Aktivierung eines angezeigten Leistungsmerkmales erkannt wurde, wird vom Endgerät EGD die der selektierten Leistungsmerkmal-Bezeichnung LMB zugehörige Tabellenposition p an das Benutzerinterface-Modul zurückübermittelt. Anhand dieser zurückübermittelten Tabellenposition p wird in der Leistungsmerkmal-Tabelle LMTz die durch die Tabellenposition p bezeichnete Leistungsmerkmal-Kennzahl LKZ ermittelt und an die Wahlbewertungseinrichtung WABE weitergeleitet.

In dem Fall, daß keine Aktivierung eines Leistungsmerkmals vorgenommen wurde und eine Anzeige von weitere Leistungsmerkmalen gewünscht wird, wird der Tabellenzeiger auf die nächste Tabellenposition p in der Leistungsmerkmal-Tabelle LMTz eingestellt, in der eine Leistungsmerkmal-Bezeichnung LMB eingetragen ist. Die von dem Tabellenzeiger bezeichnete Tabellenposition p wird wiederum an die Datenbasis DB zum Auslesen des an dieser Tabellenposition p befindlichen Eintrages in der Wahlbewertungsgruppentabelle GBBPi übermittelt.

Für den Fall, daß der gelesene Wert als ungültige Leistungsmerkmal-Kennzahl LKZ erkannt wird, wodurch z. B. ein fehlender Eintrag einer Leistungsmerkmal-Kennzahl LKZ in der Wahlbewertungsgruppentabelle GWBPi realisiert sein kann, wird eine Übermittlung einer Leistungsmerkmal-Bezeichnung LMB an das Endgerät EGD unterbunden und es wird sofort der Tabellenzeiger auf die nächste Tabellenposition p eingestellt, an der eine Leistungsmerkmal-Bezeichnung LMB steht. Diese Tabellenposition p wird wiederum an die Datenbasis DB zum Auslesen des in der zugehörigen Wahlbewertungsgruppentabelle GWBPi an dieser Tabellenposition p befindlichen Eintrages übermittelt.

Neben einer Anzeige von Leistungsmerkmalen in der Absicht eines derselben zu aktivieren ist am Endgerät EGD auch eine Anzeige von Leistungsmerkmal-Zuständen, also ob z. B. eine "variable Anrufumleitung" ein- oder ausgeschaltet ist, oder ein "Anrufschutz" ein- oder ausgeschaltet ist möglich. Auch für eine Anzeige dieser Leistungsmerkmal-Zustände wird das vorbeschriebene Verfahren benutzt, wobei aus der Datenbasis auch der Zustand des betreffenden Leistungsmerkmales ausgelesen und an das Endgerät EGD übermittelt wird. Eine mögliche Aktivierung eines Leistungsmerkmals muß bei der Anzeige von Leistungsmerkmal-Zuständen allerdings nicht berücksichtigt werden.

Eine Variante des vorbeschriebenen Verfahrens kommt bei der am Endgerät EGD möglichen Belegung von programmierbaren Funktionstasten zum Tragen. Weist das Endgerät EGD programmierbare Funktionstasten auf, so können diese mit einer bestimmten Funktion belegt werden, also z. B. mit der Funktion ein konkretes Leistungsmerkmal zu aktivieren oder zu deaktivieren. Bei der Belegung einer programmierbaren Funktionstaste werden dem Benutzer anhand eines Menüs Vorschläge unterbreitet, welche Funktion der betreffenden programmierbaren Funktionstaste zukommen soll. So kann eine programmierbare Funktionstaste z. B. zur Anrufumleitungstaste, Konferenztaste, Direktruftaste, Briefkastentaste, Parktaste etc. eingestellt werden. Aus der angebotenen Vielfalt kann der Benutzer die gewünschte Funktion auswählen und mit dieser die betreffende programmierbare Taste belegen.

In dem Benutzerinterface-Modul BI ist dafür eine weitere Tabelle (nicht dargestellt) hinterlegt, die sämtliche zur Belegung in Frage kommenden Funktionstastenbezeichnungen beinhaltet und aus der, analog zu den Leistungsmerkmal-Bezeichnungen LMB in den Leistungsmerkmal-Tabelle LMT, Funktionstastenbezeichnungen also letztendlich wieder Leistungsmerkmal-Bezeichnungen zur Anzeige am Endgerät EGD gebracht werden. Bevor eine Leistungsmerkmal-Bezeichnungen zur Anzeige gebracht, also zur Belegung angeboten wird, erfolgt in der Datenbasis zugehörig zur Wahlbewertungsgruppe des Benutzers eine Überprüfung, ob eine Belegung einer programmierbaren Funktionstaste mit dieser Leistungsmerkmal-Bezeichnungen am Endgerät erlaubt ist oder nicht. Dies hängt letztendlich wieder davon ab, ob der betreffende Benutzer zur Aktivierung des Leistungsmerkmals berechtigt ist. Nur für den Fall, daß der Benutzer zur Aktivierung des Leistungsmerkmals berechtigt ist, wird die zugehörige Leistungsmerkmal-Bezeichnung dem Benutzer zur Belegung einer programmierbaren Funktionstaste angeboten.

## Patentansprüche

1. Verfahren zum Anzeigen von Leistungsmerkmal-Bezeichnungen (LMB), im Sinne eines Anbietens zur Selektierung, an einer Anzeigeeinrichtung (AZ) eines mit einem Teilnehmeranschluß eines Kommunikationssystems (KS) verbundenen Kommunikationsendgerätes (EGD), insbesondere Fernsprechendgerätes,
**dadurch gekennzeichnet,**
**daß** nach Erhalt einer von einem Bediener veranlaßten Anzeigeanforderung für Leistungsmerkmale von dem Kommunikationsendgerät (EGD) an das Kommunikationssystem (KS) eine Anzeigemeldung übermittelt wird,
**daß** eine im Kommunikationssystem (KS) gespeicherte, teilnehmeranschlußunabhängig-verfügbare Leistungsmerkmale bezeichnende Leistungsmerkmal-Tabelle (LMT) zur Übertragung an das Kommunikationsendgerät (EGD) eingestellt wird,
**daß** vor einer Übertragung einer jeweiligen, in der Leistungsmerkmal-Tabelle (LMT) enthaltenen Leistungsmerkmal-Bezeichnung (LMB), eine Berechtigung des Teilnehmeranschlusses für dieses Leistungsmerkmal anhand einer in einer Datenbasis (DB) des Kommunikationssystems (KS) gespeicherten, für den Teilnehmeranschluß berechtigte Leistungsmerkmale ausweisenden Berechtigungstabelle (GWBP) überprüft wird, und
**daß** nur bei positivem Prüfergebnis eine Übertragung der betreffenden Leistungsmerkmal-Bezeichnung (LMB) erfolgt.

2. Verfahren nach Anspruch 1,
**dadurch gekennzeichnet,**
**daß** die Selektierung zum Zwecke einer Aktivierung eines Leistungsmerkmals erfolgt.

3. Verfahren nach Anspruch 1,
**dadurch gekennzeichnet,**
**daß** die Selektierung zum Zwecke einer Belegung einer programmierbaren Funktionstaste des Kommunikationsendgerätes (EGD) erfolgt.

4. Verfahren nach einem der vorhergehenden Ansprüche,
**dadurch gekennzeichnet,**
**daß** im Kommunikationssystem (KS) eine Mehrzahl von Leistungsmerkmal-Tabellen (LMTz, z+1, ...) gespeichert sind, die jeweils einem von mehreren Endgerätezuständen zugeordnet sind und
**daß** abhängig von dem bei Veranlassen der Anzeigeanforderung vorliegenden Endgerätezustand des Kommunikationsendgerätes (EGD) die diesem Endgerätezustand zugeordnete Leistungsmerkmal-Tabelle (LMTz) zur Übertragung eingestellt wird.

5. Verfahren nach einem der vorhergehenden Ansprüche,
**dadurch gekennzeichnet,**
**daß** die Leistungsmerkmal-Tabellen (LMTz, z+1, ...) jeweils eine Vielzahl von Tabellenpositionen (p) aufweisen, unter denen jeweils eine Leistungsmerkmal-Bezeichnung (LMB) speicherbar ist und
**daß** bei einer am Kommunikationsendgerät (EGD) bewirkten Selektierung einer Leistungsmerkmal-Bezeichnung (LMB) die zugehörige Tabellenposition (p) zur Identifizierung des betreffenden Leistungsmerkmals vom Kommunikationsendgerät (EGD) an das Kommunikationssystem (KS) übermittelt wird.

6. Verfahren nach Anspruch 5,
**dadurch gekennzeichnet,**
**daß** in den Leistungsmerkmal-Tabellen (LMTz, z+1,...) zu den gespeicherten Leistungsmerkmal-Bezeichnungen (LMB) jeweils eine zugeordnete Leistungsmerkmal-Kennzahl (LKZ) gespeichert ist und
**daß** anhand der vom Kommunikationsendgerät (EGD) als Folge einer bewirkten Selektierung übermittelten Tabellenposition (p) die dem betreffenden Leistungsmerkmal zugeordnete Leistungsmerkmai-Kennzahl (LKZ) identifiziert und an eine Wahlbewertungseinrichtung (WABE) des Kommunikationssystems (KS) übermittelt wird.

7. Verfahren nach einem der vorhergehenden Ansprüche,
**dadurch gekennzeichnet,**
**daß** in der Datenbasis (DB) eine Mehrzahl von Berechtigungstabellen (GWBPi, i+1,..) gespeichert sind, die jeweils einer Gruppe von Teilnehmeranschlüssen zugeordnet sind,
**daß** die Berechtigungstabellen (GWBPi, i+1,..) jeweils eine Vielzahl von Tabellenpositionen (p) aufweisen, unter denen jeweils eine Leistungsmerkmal-Kennzahl (LKZ) speicherbar ist und
**daß** die Zuordnung von Leistungsmerkmal-Kennzahlen (LKZ) zu Tabellenpositionen (p) in den Berechtigungstabellen (GWBPi, i+1,..) sowie Leistungsmerkmal-Tabellen (LMTz, z+1,..) gleich ist.

## Claims

1. Method for displaying service-feature descriptors (LMB), in order to provide them for selection, on a display device (AZ) on a communication terminal (EGD), particularly a telephone terminal, which is connected to a subscriber line in a communication system (KS),
**characterized**
**in that**, following receipt of a display request for service features which has been prompted by a user, the communication terminal (EGD) transmits a display message to the communication system (KS),
**in that** a service-feature table (LMT) which is stored in the communication system (KS) and denotes service features which are available independently of subscriber line is set for transmission to the communication terminal (EGD),
**in that**, before a respective service-feature descriptor (LMB) contained in the service-feature table (LMT) is transmitted, the subscriber line's authorization for this service feature is checked using an authorization table (GWBP) which is stored in a database (DE) in the communication system (KS) and contains service features authorized for the subscriber line, and
**in that** the service-feature descriptor (LMB) in question is transmitted only if the result of the check is positive.

2. Method according to Claim 1,
**characterized**
**in that** the selection is made in order to activate a service feature.

3. Method according to Claim 1,
**characterized**
**in that** the selection is made in order to reserve a programmable function key on the communication terminal (EGD).

4. Method according to one of the preceding claims,
**characterized**
**in that** the communication system (KS) stores a plurality of service-feature tables (LMTz, z+1, ...) which are respectively associated with one of a plurality of states for a terminal, and
**in that**, depending on the terminal state which the communication terminal (EGD) is in when the display request is prompted, the service-feature table (LMTz) associated with this terminal state is set for transmission.

5. Method according to one of the preceding claims,
**characterized**
**in that** the service-feature tables (LMTz, z+1, ...) each have a multiplicity of table positions (p) which can be used to store a respective service-feature descriptor (LMB), and
**in that** selection of a service-feature descriptor (LMB) which is prompted on the communication terminal (EGD) involves the associated table position (p) being transmitted from the communication terminal (EGD) to the communication system (KS) in order to identify the service feature in question.

6. Method according to Claim 5,
**characterized**
**in that** the service-feature tables (LMTz, z+1, ...) store, for the stored service-feature descriptors (LMB), a respective associated service-feature code number (LKZ), and
**in that** the table position (p) transmitted by the communication terminal (EGD) in response to a prompted selection is used to identify the service-feature code number (LKZ) associated with the service feature in question and to transmit it to a selection-code analysis device (WABE) in the communication system (KS).

7. Method according to one of the preceding claims,
**characterized**
**in that** the database (DB) stores a plurality of authorization tables (GWBPi, i+1, ..) which are respectively associated with a group of subscriber lines,
**in that** the authorization tables (GWBPi, i+1, ..) each contain a multiplicity of table positions (p) which can be used to store a respective service-feature code number (LKZ), and
**in that** the association between service-feature code numbers. (LKZ) and table positions (p) is the same in the authorization tables (GWBPi, i+1, ..) and service-feature tables (LMTz, z+1, ..).

## Revendications

1. Procédé pour afficher sur un dispositif d'affichage (AZ) d'un appareil terminal de communication (EGD), en particulier d'un appareil terminal téléphonique, relié à une ligne d'abonné d'un système de communication (KS) les noms des services supplémentaires (LMB) offerts à l'usager dans le sens d'une offre à sélectionner,
**caractérisé en ce que**
après réception d'une demande d'affichage des services supplémentaires formulée par un usager, un message d'affichage est transmis par l'appareil terminal de communication (EGD) au système de communication (KS),
**en ce qu'**une liste des services supplémentaires (LMT) désignant les services supplémentaires disponibles indépendamment de la ligne d'abonné et enregistrée dans le système de communication (KS) est configurée en vue de la transmission à l'appareil terminal de communication (EGD),
**en ce qu'**avant une transmission d'un nom de service supplémentaire (LMB) contenu dans la liste des services supplémentaires (LMT), une autorisation de la ligne d'abonné pour ce service supplémentaire est vérifiée à l'aide d'une liste d'autorisations (GWBP) spécifiant les services supplémentaires autorisés pour la ligne d'abonné et enregistrée dans une base de données (DB) du système de communication (KS), et
**en ce qu'**une transmission du nom de service supplémentaire (LMB) concerné n'a lieu qu'en cas de résultat positif de la vérification.

2. Procédé selon la revendication 1,
**caractérisé en ce que**
la sélection a lieu en vue d'une activation d'un service supplémentaire.

3. Procédé selon la revendication 1,
**caractérisé en ce que**
la sélection a lieu en vue d'une affectation d'une touche de fonction programmable de l'appareil terminal de communication (EGD).

4. Procédé selon l'une des revendications précédentes,
**caractérisé en ce que**
plusieurs listes de services supplémentaires (LMTz, z+1, ...) affectées chacune à un parmi plusieurs états de l'appareil terminal sont enregistrées dans le système de communication (KS) et
**en ce que**, indépendamment de l'état de l'appareil terminal de communication (EGD) au moment de la formulation de la demande d'affichage, la liste des services supplémentaires (LMTz) affectée à cet état de l'appareil terminal est configurée en vue de la transmission.

5. Procédé selon l'une des revendications précédentes,
**caractérisé en ce que**
les listes des services supplémentaires (LMTz, z+1, ...) comprennent chacune plusieurs positions (p), sous lesquelles respectivement un nom de service supplémentaire (LMB) peut être enregistré, et
**en ce qu'**au moment d'une sélection d'un nom de service supplémentaire (LMB) effectuée sur l'appareil terminal de communication (EGD), la position (p) associée pour identifier le service supplémentaire concerné est transmise de l'appareil terminal de communication (EGD) au système de communication (KS).

6. Procédé selon la revendication 5,
**caractérisé en ce que**
un numéro d'identification des services supplémentaires (LKZ) attribué aux noms des services supplémentaires (LMB) enregistrés est enregistré dans les listes des services supplémentaires (LMTz, z+1, ...) et
**en ce que**, à l'aide de la position (p) transmise par l'appareil terminal de communication (EGD) à la suite d'une sélection effectuée, le numéro d'identification des services supplémentaires (LKZ) attribué au service supplémentaire concerné est identifié et transmis à un dispositif d'évaluation de sélection (WABE) du système de communication (KS).

7. Procédé selon l'une des revendications précédentes,
**caractérisé en ce que**
plusieurs listes d'autorisations (GWBPi, i+1, ...) attribuées chacune à un groupe de lignes d'abonné sont enregistrées dans la base de données (DB),
**en ce que** les listes d'autorisations (GWBPi, i+1, ...) comprennent chacune plusieurs positions (p), sous lesquelles respectivement un numéro d'identification des services supplémentaires (LKZ) peut être enregistré, et
**en ce que** l'attribution des numéros d'identification des services supplémentaires (LKZ) aux positions (p) est identique dans les listes d'autorisations (GWBPi, i+1, ...) et les listes des services supplémentaires (LMTz, z+1, ...).
